# EUROPEAN PATENT APPLICATION

(11) **EP 3 163 678 A1**
(43) Date of publication of application: **03.05.2017**
(21) Application number: 16196442.4
(22) Date of filing: 28.10.2016
(51) Int. Cl.: H01Q 11/08, H01Q 21/28, H04B 1/08, H04B 7/08

(54) **HEAVY-DUTY AUDIO EQUIPMENT**

(30) Priority: 30.10.2015 US 201562248624 P
(71) Applicant: The Stanley Works Israel Ltd., 48091 Rosh Ha'Ayin (IL)
(72) Inventor: Stern, Ido, 43201 Raanana (IL); Kai-Man, Chris Chan, Kowloon (HK); Siu-Meng, Samule Cheng, Kowloon (HK)
(74) Representative: SBD IPAdmin

(57) **Abstract**

An audio equipment is provided, comprising a housing, a radio tuner circuit disposed within the housing, and first and second helical antennae disposed within the housing. The first and second helical antennae each have a circular polarization. The audio equipment includes a switch connected to the first and second helical antennae arranged to connect one of the first and second helical antennae to the radio tuner circuit, and a controller arranged to control the switch for selection between the first and second helical antennas.

## Description

It is well known that audio equipment, such as portable radios, are taken to construction sites, so that the construction workers can listen to music, talk shows, etc., while working. However, the audio equipment may be destroyed at the jobsite because tools may be dropped on them. Similarly, the equipment may fall from a table, etc., resulting in damage thereto.

Furthermore, because construction workers have different cordless power tools, it would be beneficial if the audio equipment would receive the rechargeable battery packs used with the power tools in order to charge the battery packs and/or power the audio equipment.

US Patent Nos. 6,427,070 and 6,308,059, which are hereby incorporated by reference, disclose a heavy-duty audio equipment that can charge power tool battery packs and that can withstand the rigors of the jobsite.

An audio equipment comprises a housing, a radio tuner circuit disposed within the housing, first and second helical antennae disposed within the housing, the first and second helical antennae having a circular polarization, and a switch connected to the first and second helical antennae for connecting one of the first and second helical antennae to the radio tuner circuit. A plate antenna and/or a wire may be connected to the ground. The plate antenna and/or wire antenna are disposed within the housing.
Figure 1 is a perspective view of a heavy-duty audio equipment.
Figure 2 is a cross-sectional view of the audio equipment shown in Figure 1 along plane B-B-B.
Figure 3 is a block diagram showing the main components of the audio equipment shown in Figure 1.
Figure 4 is a top plan view of the audio equipment shown in Figure 1.
Figure 5 is a block diagram showing an antennae configuration for the audio equipment shown in Figure 1.

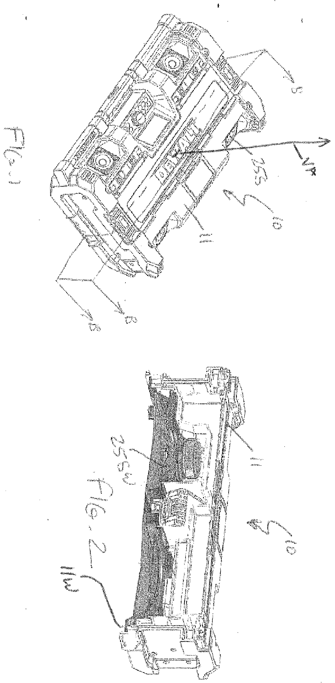

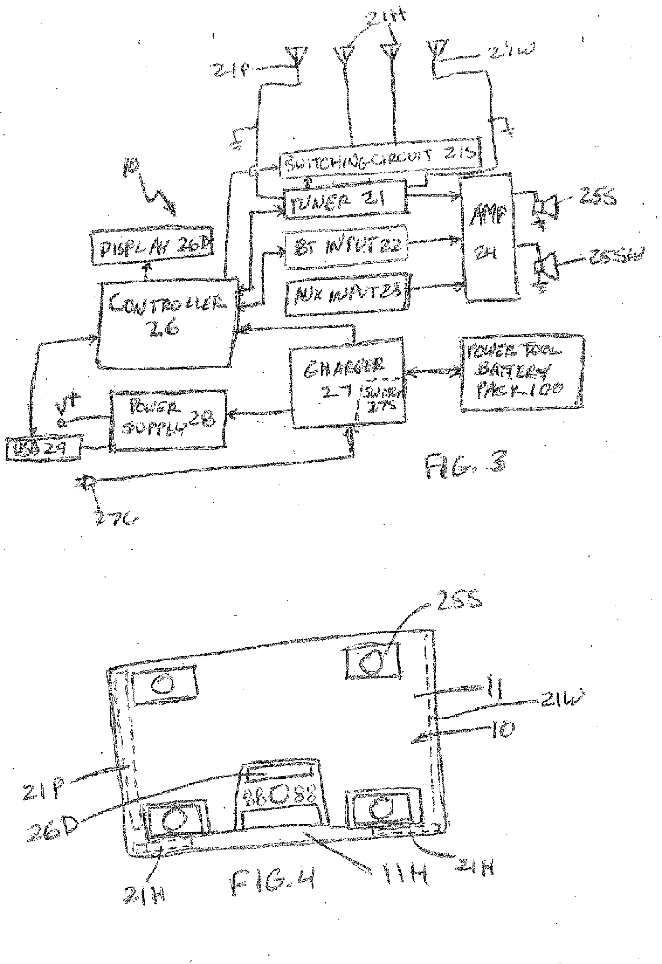

Referring to Figures 1-3, an audio equipment component, such as radio 10, of the present invention comprises a housing 11. Housing 11 is preferably made of a rigid material, such as plastic and in particular ABS, and has a bottom wall 11 W to support the radio 10 on the ground or support surface. Resilient, impact-absorbing material, such as elastomer or rubber, may be disposed on housing 11 in an overmolding process.

Housing 11 may have a handle 11 H for carrying radio 10. Housing 11 may be latched unto or engaged with a storage assembly, such as that disclosed in US Patent No. 8,567,796, which is fully incorporated herein by reference.

Housing 11 may support audio circuitry, such as a radio tuner circuit 21, a BlueTooth® audio input circuit 22 and/or an auxiliary input 23. Persons skilled in the art will recognize that radio tuner circuit 21 can include any circuitry necessary to demodulate AM, FM, digital audio broadcast (DAB) and/or satellite radio signals. Radio tuner circuit 21 may include a Keystone Semiconductor T2_L4_8650C DAB/FM module, for example. In addition persons skilled in the art shall recognize that audio circuitry may include other circuitry for producing audio signals via circuitry used with a cassette deck, compact disk, MP3 players or other methods to play music.

The audio circuitry is preferably connected to amplifier 24 for amplifying the audio signals. Housing 11 may also support speakers 25S and/or sub-woofers 25SW, which are preferably connected to amplifier 24 for converting the amplified signal into audible signals.

Radio tuner circuit 21 and/or BlueTooth® audio input 22 may be connected to and/or controlled by a controller 26. Controller 26 is also preferably connected to a charger circuitry 27 for charging power tool battery packs 100.

Preferably radio tuner circuit 21 has at least one antenna connected thereto. Two helical antennae 21 H may be disposed within housing 11, preferably adjacent to handle 11 H. Each helical antenna 21 H may be between about 7 centimeters and about 15 centimeters in overall length. Preferably, each helical antenna 21 H is about 13 centimeters and about 15 centimeters in overall length, and is preferably about 14.5 centimeters long in the operating helical configuration. Each helical antenna 21 H may have a diameter between about 0.5 centimeters and 2 centimeters (preferably being about 16 millimeters), and a longitudinal axis. Persons skilled in the art will recognize that, if the helical antenna 21 H were stretched linearly, the overall length would be between about 45 centimeters and 90 centimeters long. Preferably the longitudinal axes of the helical antennae 21 H are substantially coaxial, and horizontal when housing 11 is disposed on the position shown in Figure 1, i.e., with the bottom wall 11 W on the ground or support surface.

A plate antenna 21 P may be provided within housing 11 along one side of housing 11. Plate antenna 21 P is preferably made of aluminum. Preferably plate antenna 21 P is between about 15 centimeters and about 25 centimeters long (preferably about 23.2 centimeters long) and about 4-8 centimeters wide (preferably about 7 centimeters wide). The longitudinal axis of plate antenna 21 P may be substantially horizontal when housing 11 is disposed on the position shown in Figure 1 and thus substantially perpendicular to the longitudinal axes of the helical antennae 21 H.

A wire antenna 21 W may be provided within housing 11 along one side of housing 11. Wire antenna 21 W may be made of 24 gauge (AWG) wire having a length between about 15 centimeters and about 25 centimeters long (preferably about 25 centimeters long). Persons skilled in the art will recognize that wire antenna 21W may be made of wire as thick as 22 gauge. The longitudinal axis of wire antenna 21 W may be substantially horizontal when housing 11 is disposed on the position shown in Figure 1 and thus substantially perpendicular to the longitudinal axes of the helical antennae 21 H.

Persons skilled in the art will recognize that it is preferable to dispose helical antennae 21 H, plate antenna 21 P and/or wire antenna 21 W within housing 11 so that they are well protected against the rigors of the construction jobsite. It is preferable to dispose helical antennae 21 H, plate antenna 21 P and/or wire antenna 21 W completely within housing 11.

Persons skilled in the art shall recognize that antenna(e) typically have a vertical polarization, a horizontal polarization, a left hand circular (or mixed) polarization, a right hand circular (or mixed) polarization, etc., and that the polarization of the antenna(e) is typically selected to match the polarization of the broadcast signal. Accordingly, in order to receive FM or DAB broadcast signals, which have a vertical polarization, it would be typical to use a vertically polarized antenna. Rather than use vertically polarized antennae, the helical antennae 21 H preferably have a circular polarization (preferably a right hand circular polarization), and plate antenna 21 P and wire antenna 21 W preferably have a horizontal polarization.

Radio tuner circuit 21 may have a switching circuit 21 S for selecting the antenna input. Persons skilled in the art will recognize that the switching circuit 21 S may be controlled by controller 26 or radio tuner circuit 21. The helical antennae 21 H may be connected to the switching circuit 21 S for selecting between the two. Plate antenna 21 P and/or wire antenna 21 W may be connected to radio tuner circuit 21, switching circuit 21 S and/or ground.

Persons skilled in the art will recognize that the helical antennae 21 H have two leads. One lead of the left helical antenna 21 H is preferably unconnected. The other lead of left helical antenna 21 H is connected to the switching circuit 21 S and/or radio tuner circuit 21. Similarly, one lead of the right helical antenna 21 H is preferably unconnected, while the other lead of the right helical antenna 21 H is connected to the switching circuit 21 S and/or radio tuner circuit 21. The plate antenna 21 P and wire antenna 21 W are connected to ground, which in turn is connected to a ground in radio tuner circuit 21. Such connection schemes effectively create two compound array antennae with substantially perpendicular elements.

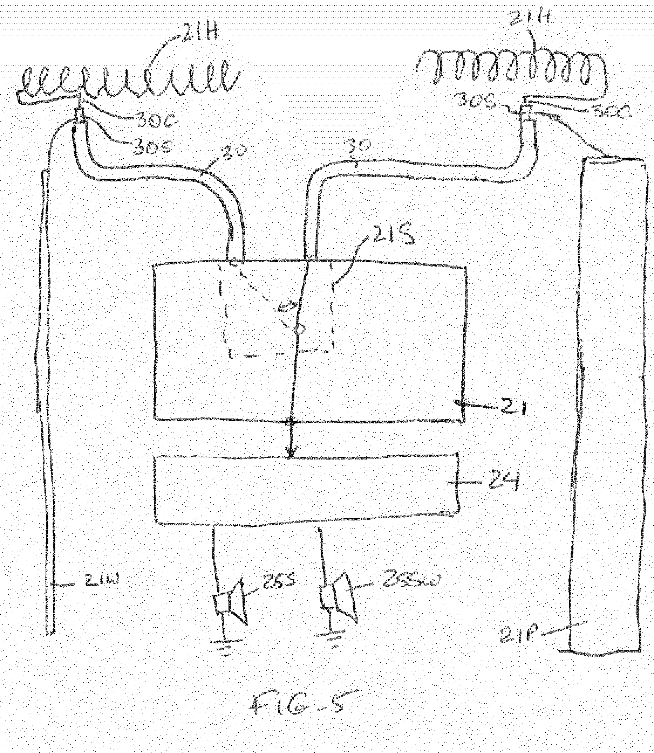

In a preferred embodiment shown in Figure 5, one lead of the left helical antenna 21 H is unconnected while the other lead may be connected to a middle core 30C of a first coaxial cable 30, preferably a 50 ohm coaxial cable. The plate antenna 21 P is preferably connected to the ground shield 30S of the first coaxial cable 30. The first coaxial cable 30 in turn may be connected to switching circuit 21 S and/or radio tuner circuit 21. For example, the middle core would be connected to an antenna port of T2_L4_8650C DAB/FM module, while the ground is connected to the plate antenna 21 P.

Similarly, one lead of the right helical antenna 21 H is unconnected while the other lead may be connected to a middle core 30C of a second coaxial cable 30, preferably a 50 ohm coaxial cable. The wire antenna 21 W is preferably connected to the ground shield 30S of the second coaxial cable 30. The second coaxial cable 30 in turn may be connected to switching circuit 21 S and/or radio tuner circuit 21. For example, the middle core 30S would be connected to an antenna port of T2_L4_8650C DAB/FM module, while the ground is connected to the wire antenna 21 W. Persons skilled in the art will recognize that the first and second coaxial cables 30 may be isolated. Persons skilled in the art will recognize that the helical antennae 21 H may alternatively be connected to the ground shield 30S of their respective coaxial cables 30, while the wire and plate antennae 21 W, 21 P may be connected to the middle core 30C of their respective coaxial cable.

One method for selecting the antenna input may be selecting a default antenna, such as the left helical antenna 21 H. The strength of the signal received by such antenna is measured and averaged for a predetermined period of time, such as 3 seconds. Similarly the bit error rate of a DAB signal may be calculated and averaged for a predetermined period of time, such as 3 seconds. If the signal strength is below a predetermined threshold and/or the bit error rate is higher than a predetermined threshold (e.g., 70%), the switching circuit 21 S would select another antenna, such as the right helical antenna 21 H.

The strength of the signal received by such antenna is measured and averaged for a predetermined period of time, such as 3 seconds. Similarly the bit error rate of a DAB signal may be calculated and averaged for a predetermined period of time, such as 3 seconds. If the signal strength is below a predetermined threshold and/or the bit error rate is higher than a predetermined threshold (e.g., 70%), controller 26 may provide an "error" or "low signal" message on display 26D.

With such arrangement, antenna reception is relatively uniform regardless of the orientation of housing 11. In this regard, "orientation" refers to the position of radio 10 relative to a vertical axis VA, where the radio 10 is originally disposed in the orientation shown in Figure 1. In other words, the orientation of radio 10 refers to the rotational position of radio 10 relative to vertical axis VA, such as the rotational position shown in Figure 1.

Persons skilled in the art will understand that the present arrangement allows a user can rotate radio 10 360 degrees with minimal signal strength differential. For example, if the maximum signal strength received via the antennae is around 48 dB and the average signal strength around the different rotational positions is about 44.4 dB, the maximum drop in signal strength throughout the full rotation of radio 10 will be about 4-5 dB from the average signal strength, which is a drop of about 9% and about 11 % of the average signal strength. Furthermore, the maximum drop in signal strength throughout the full rotation of radio 10 will be about 8 dB from the maximum signal strength, which is about 16% of the maximum signal strength.

Charger circuitry 27 may receive power from an alternating current source via connector 27C. Charger circuitry 27 may provide power to the power tool battery pack 100 for charging such battery pack. Persons skilled in the art are referred to US Patent No. 8,653,787, which is incorporated herein by reference, for further information on charger circuitry 27 and power tool battery pack 100.

Charger circuitry 27 may provide power to a power supply circuit 28, which could provide power to the other circuits in radio charger 10, as well as power to a USB port 29. The power provided by charger circuitry 27 may originate from the alternating current source connected to connector 27C (and preferably regulated and converted to direct current), and/or from a power tool battery pack 100 connected to charger circuitry 27. In other words, the audio circuitry and amplifier 24 may be ultimately powered by the alternating current source and/or a power tool battery pack 100.

Charging circuit 27 may have a switching mechanism 27S to select the appropriate power source. For example, switching mechanism 27S would select whether the alternating current source or power tool battery pack 100 provides power to the power supply circuit 28. Switching mechanism 27S may comprise relays, transistors or other switching devices as is well known in the art. Preferably power supply circuit 28 can accept power from power tool battery packs 100 having different nominal voltages.

Sometimes charging circuit 27 may emit interfering signals that are received by the antennae 21 H, 21 W, 21 P. Preferably shielding is provided around charging circuit 27 to minimize the emission of such interfering signals.

The description of the invention is merely exemplary in nature and, thus, variations that do not depart from the gist of the invention are intended to be within the scope of the invention. Such variations are not to be regarded as a departure from the scope of the invention.

## Claims

1. An audio equipment comprising a housing,
a radio tuner circuit disposed within the housing,
a first helical antenna disposed within the housing,
a second helical antenna disposed within the housing, the first and second helical antennae each having a circular polarization,
a switch connected to the first and second helical antennae arranged to connect one of the first and second helical antennae to the radio tuner circuit, and
a controller arranged to control the switch for selection between the first and second helical antennas.

2. The audio equipment of claim 1, further comprising a wire antenna, disposed within the housing such that the longitudinal axis of the wire antenna is substantially perpendicular to the longitudinal axis of the first helical antenna, wherein the wire antenna is connected to ground.

3. The audio equipment of claim 1 or claim 2, further comprising a plate antenna disposed within the housing such that the longitudinal axis of the plate antenna is substantially perpendicular to the longitudinal axis of the second helical antenna, wherein the plate antennae are connected to ground.

4. The audio equipment of any preceding claim, wherein the longitudinal axes of the first and second helical antennae are substantially coaxial with each other.

5. The audio equipment of any preceding claim, wherein the longitudinal axes of the first and second helical antennae are substantially horizontal when the audio equipment is disposed in position for normal use with a bottom wall of the housing on a substantially horizontal support surface.

6. The audio equipment of any preceding claim, wherein the antennae are disposed completely within the housing.

7. The audio equipment of any preceding claim, wherein one lead of each of the first and second helical antennae is unconnected to the radio tuner circuit.

8. The audio equipment of any preceding claim, wherein the radio tuner circuit comprises digital audio broadcast demodulation circuitry.

9. The audio equipment of any preceding claim, wherein the first and second helical antennae both have the same circular polarization.

10. The audio equipment of claim 9, wherein the first and second helical antennae both have a right hand circular polarization.

11. The audio equipment of any preceding claim, wherein each of the first and second helical antennae are between 70 mm and 150 mm in overall length.

12. The audio equipment of any preceding claim, wherein each of the first and second helical antennae are between 5 mm and 20 mm in diameter.

13. The audio equipment of any preceding claim, wherein the controller is arranged to control the switch to select between the first and second helical antennae based on measurements of the strength and/or bit error rate of the signal received by a respective antenna.
